# EUROPEAN PATENT SPECIFICATION

(11) **EP 4 692 717 B1**
(45) Date of publication and mention of the grant of the patent: **26.08.2026**
(21) Application number: 24207691.7
(22) Date of filing: 21.10.2024
(51) Int. Cl.: G01B 3/1043, G01B 3/1092

(54) **MULTIFUNCTIONAL LASER RANGING TAPE MEASURE**
MULTIFUNKTIONALE LASERENTFERNUNGSMESSUNGSMASSBAND
MÈTRE RUBAN MULTIFONCTIONS AVEC TÉLÉMÉTRIE LASER

(30) Priority: 08.08.2024 CN 202421909285 U
(43) Date of publication of application: 11.02.2026
(73) Proprietor: SNDWAY TECHNOLOGY (GUANGDONG) CO., LTD., Dongguan Guangdong (CN)
(72) Inventor: XU, Xiaojian, Dongguan , Guangdong (CN); HE, Gang, Dongguan , Guangdong (CN)
(74) Representative: Herrero & Asociados, S.L.

(56) References cited:
- CN-A- 116 294 882
- CN-U- 221 280 087
- US-A1- 2023 296 775

## Description

### TECHNICAL FIELD

The invention relates to the field of measuKring devices, and particularly to a multifunctional laser ranging tape measure.

### BACKGROUND

Most existing tape measures only have the mechanical function of measuring length or distance, and their functions are singular, unable to meet other measurement needs. When other measurement requirements are needed, corresponding devices must be prepared separately for measurement, making it inconvenient to carry and increasing the cost of use.

Currently, there are manufacturers on the market that have integrated functions into tape measures, adding the functions such as horizontal laser projecting or laser ranging. However, in order not to sacrifice small size and portability of the tape measure, it is not possible to integrate more measurement functions. Some manufacturers have integrated laser projecting and laser ranging modules inside the tape measure. However, due to the integration of more functional modules, the tape measure has a larger volume and is relatively thick, making it inconvenient to carry and hold. Moreover, the laser projecting and laser ranging modules are directly assembled on a shell of the tape measure, which makes the assembly process more complex and the assembly efficiency low.

In the prior art CN 221 280 087 U discloses a multifunctional measuring tape.

### SUMMARY

### I. Problem to be solved

The invention provides a multifunctional laser ranging tape measure, aiming at providing a compact and multifunctional laser ranging tape measure.

### II. Technical solution

The multifunctional laser ranging tape measure includes a laser ranging assembly, a laser projecting assembly, a tape measure assembly, and a shell. The tape measure assembly is disposed inside the shell, an optical bracket is arranged along a radial direction of the tape measure assembly, the laser ranging assembly and the laser projecting assembly are fixed side by side on the optical bracket. The optical bracket includes a rear extension part, and a printed circuit board (PCB) is fixed on the rear extension part. The invention is defined in appended independent claim 1.

In an embodiment, a battery and a button plate are disposed inside the shell, and functional physical buttons are disposed at positions corresponding to the button plate on the shell.

In an embodiment, the optical bracket includes a fixing position of the laser ranging assembly and a fixing position of the laser projecting assembly. The laser ranging assembly is fixed to the fixing position of the laser ranging assembly by threaded connection or snap ring fitting, and the laser projecting assembly is fixed to the fixing position of the laser projecting assembly by a locking fastener.

In an embodiment, the laser ranging assembly includes a laser emission tube and a laser reception component, the shell defines a light emission window corresponding to the laser emission tube and a light reception window corresponding to the laser reception component.

In an embodiment, the tape measure assembly includes a tape measure shell, a tape core is disposed in the tape measure shell, a tape measure pivot is disposed in the tape core, and a tape is wrapped around the tape measure pivot. The tape measure pivot is fixed to the tape measure shell through a pivot seat. A lower part of the tape measure shell defines a first tape outlet, the shell defines a second tape outlet corresponding to the first tape outlet. A tape limit component is disposed on a path from the first tape outlet to the second tape outlet, and the tape limit component is disposed on a lower side of the optical bracket.

In an embodiment, the tape limit component includes a soft rubber button and a top plate, an upper end of the soft rubber button is provided with a curved surface matching a lower end of the tape, and the top plate is fixed inside the shell and located at the lower side of the optical bracket. The tape passes between the soft rubber button and the top plate.

In an embodiment, identification codes are uniformly disposed along an extension direction of the tape on the tape, and an identification code sensor capable of recognizing the identification codes is disposed above the corresponding soft rubber button inside the shell.

In an embodiment, the shell is further provided with a display screen and a measurement button.

In an embodiment, the laser ranging assembly, the laser projecting assembly, the battery, the display screen, and the identification code sensor are all electrically connected to the PCB.

In an embodiment, the PCB also is provided with a type-C charging port configured for charging the battery, and a side wall of the shell correspondingly defines an opening for the type-C charging port.

### III. Beneficial effects

A multifunctional laser ranging tape measure provided by the invention includes a laser ranging assembly, a laser projecting assembly, a tape measure assembly, and can achieve the functions of laser ranging, laser line projection, and distance measurement, so that it is not necessary to prepare three separate measuring devices with corresponding functions, making it more convenient and faster to use. By setting up an optical bracket that can fix the laser ranging assembly and the laser projecting assembly as a whole, pre-installing the laser ranging assembly and the laser projecting assembly on the optical bracket, and then fixing them as a whole inside the shell, a structure of the multifunctional laser ranging tape measure of the invention is more stable, allowing for quick installation, improving production efficiency, and integrating the laser ranging assembly and the laser projecting assembly on the same side for easy use. At the same time, it effectively reduces the overall volume of the product, and the multifunctional laser ranging tape measure adopts a rectangular design, which is more convenient to hold and use. In addition, a display screen is disposed on an upper surface of the multifunctional laser ranging tape measure, and a measurement button for a long-distance laser distance measurement is disposed behind the display screen, thus separating the measurement button from the functional buttons disposed on a side wall of the shell, making it convenient for use during measurement, and solving the problem that the existing laser ranging tape measure mixes the measurement button with the functional button and is inconvenient to operate.

### BRIEF DESCRIPTION OF DRAWINGS

FIG. 1 illustrates an exploded schematic structural diagram of a multifunctional laser ranging tape measure of the invention.
FIG. 2 illustrates an overall schematic structural diagram of the multifunctional laser ranging tape measure of the invention.
FIG. 3 illustrates a schematic diagram of a tape measure assembly of the invention.
FIG. 4 illustrates a schematic diagram of an internal structure of the multifunctional laser ranging tape measure of the invention.
FIG. 5 illustrates a schematic diagram of an optical bracket of the invention.
FIG. 6 illustrates an exploded schematic structural diagram of the optical bracket of the invention.

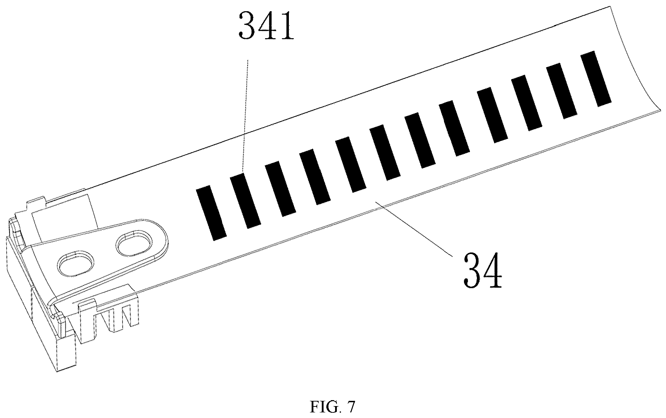

FIG. 7 illustrates a schematic diagram of a tape of the invention.

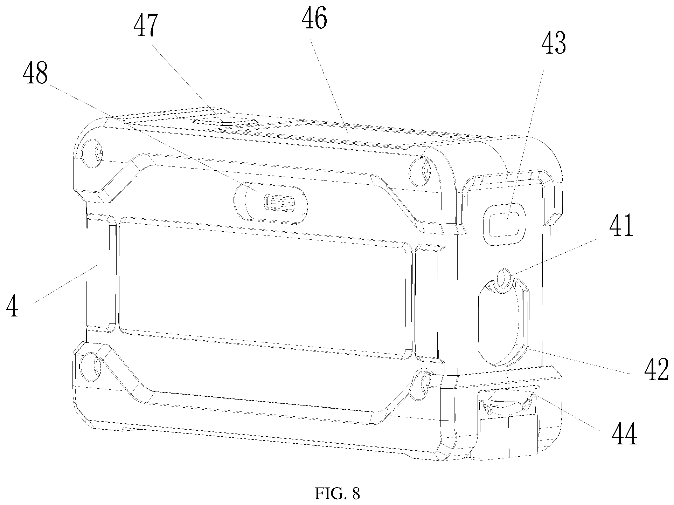

FIG. 8 illustrates a rear schematic diagram of the multifunctional laser ranging tape measure of the invention.

### Description of reference numerals:

1. laser ranging assembly; 2. laser projecting assembly; 3. tape measure assembly; 31. tape measure shell; 32. tape core; 33. tape measure pivot; 34. tape; 35. pivot seat; 36. tape limit component; 311. first tape outlet; 361. soft rubber button; 362. top plate; 4. shell; 41. light emission window; 42. light reception window; 43. laser projecting window; 44. second tape outlet; 45. identification code sensor; 46. display screen; 47. measurement button; 5. optical bracket; 6. printed circuit board; 61. type-C charging port; 7. battery; 8. button plate; 9. functional physical button; 51. rear extension part; 52. fixing position; 53. fixing position; 21. laser projecting component; 22. locking fastener; 11. laser emission tube; 341. identification code; 48. opening; 12. light receiving component; 13. internal laser tube; 14. filter holder; 15. internal light knob regulating valve; 16. receiving mirror; 17. filter; 18. arc-shaped notch.

### DETAILED DESCRIPTION OF EMBODIMENTS

In order to better explain the invention and facilitate understanding, the following will provide a detailed description of the invention through a specific embodiment, in conjunction with the attached drawings.

It should be noted that all directional indications, such as up, down, left, right, front, and back, in the embodiment of the invention are used solely to explain the relative positions and movements of the components in a specific attitude (as shown in the attached drawings). If that specific attitude changes, then the directional indications also change accordingly.

Additionally, in the invention, descriptions involving "first," and "second," are used solely for descriptive purposes and should not be construed as indicating or implying their relative importance or implicitly specifying the number of the technical features they refer to. Therefore, features designated as "first," and "second," can explicitly or implicitly include at least one of such features. In the description of the invention, the term "multiple" means at least two, such as two, and three, unless otherwise specifically limited.

In the invention, unless otherwise specifically defined and limited, terms such as "connect" and "fix" should be understood in a broad sense. For example, "fix" can refer to a fixed connection, a detachable connection, or being formed as one piece; it can be a mechanical connection or an electrical connection; it can be a direct connection or an indirect connection through an intermediary; it can be an internal connection within two components or an interactive relationship between two components, unless otherwise specifically limited. For those skilled in the art, the specific meaning of the above terms in the invention can be understood based on the specific circumstances.

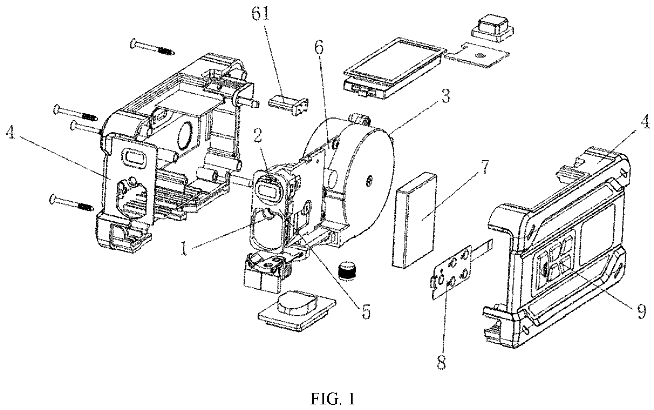

A multifunctional laser ranging tape measure device, as shown in FIG. 1, includes a laser ranging assembly 1, a laser projecting assembly 2, a tape measure assembly 3, and a shell 4. The tape measure assembly 3 is disposed inside the shell 4, an optical bracket 5 is arranged along a radial direction of the tape measure assembly 3, the laser ranging assembly 1 and the laser projecting assembly 2 are fixed side by side on the optical bracket 5. The optical bracket 5 includes a rear extension part 51, and a PCB 6 is fixed on the rear extension part 51. A battery 7 and a button plate 8 are disposed inside the shell 4, and functional physical buttons 9 are disposed at positions corresponding to the button plate 8 on the shell 4.

Specifically, the front end of the optical bracket 5 defines a fixing position 52 of the laser ranging assembly 1 and a fixing position 53 of the laser projecting assembly 2. The laser ranging assembly 1 is fixed to the fixing position 52 of the laser ranging assembly 1 by threaded connection or snap ring fitting, and the laser projecting assembly 2 is fixed to the fixing position 53 of the laser projecting assembly 2 by a locking fastener 22.

It should be noted here that during the installation process of the laser ranging assembly 1 and the laser projecting assembly 2, a positioning part and a limiting part on the optical bracket 5 are used for positioning and installation, ensuring that both the laser ranging assembly 1 and the laser projecting assembly 2 are maintained in a horizontal state, which helps to reduce errors in subsequent measurements.

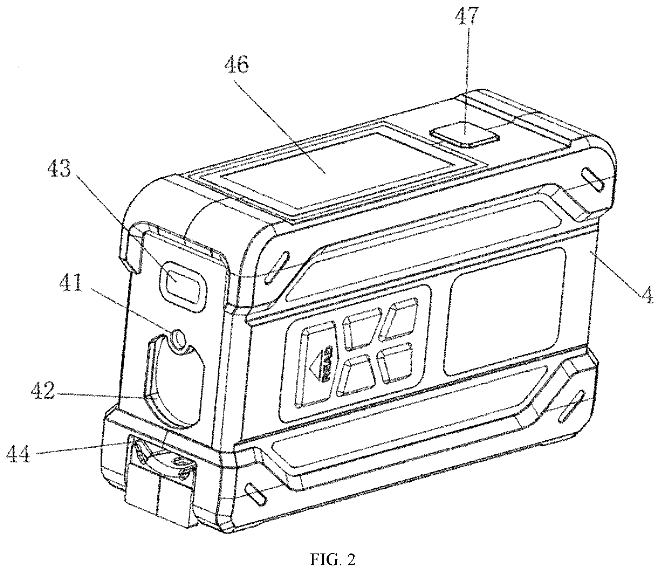

As shown in FIG. 2, the laser ranging assembly 1 includes a laser emission tube 11 and a laser reception component, the shell 4 defines a light emission window 41 corresponding to the laser emission tube 11 and a light reception window 42 corresponding to the laser reception component, and the light emission window 41 and the light reception window 42 need to be ensured to be on the same plane. The laser projecting assembly 2 includes a built-in light source, and the shell 4 defines a laser projecting window 43 corresponding to the light source.

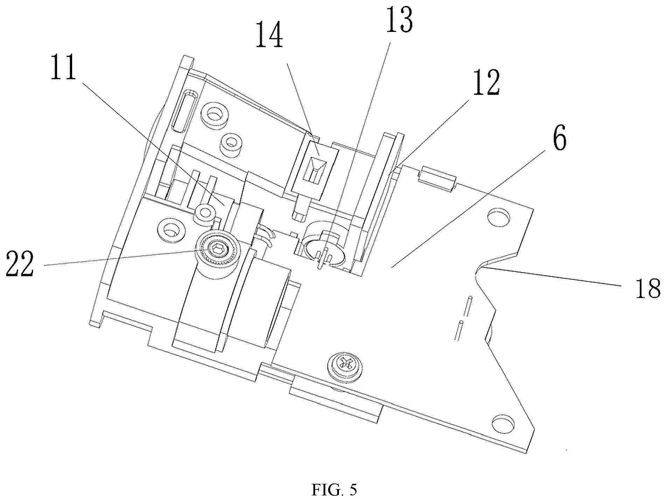

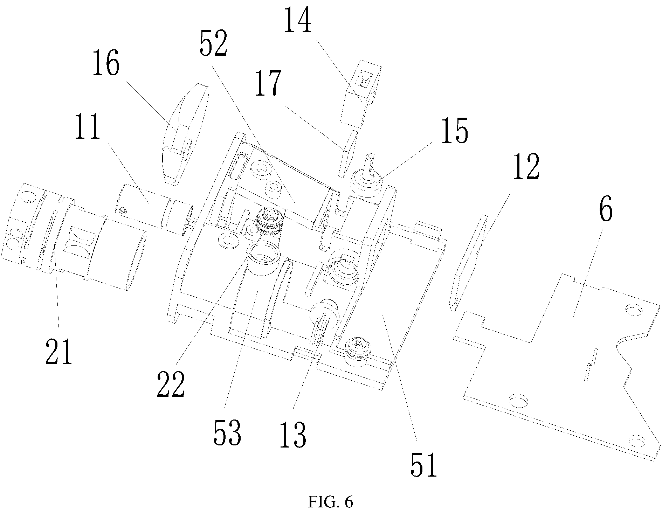

As shown in FIG. 5 and FIG. 6, the laser projecting assembly 2 includes a laser projecting component 21, and the laser projecting component 21 includes the built-in light source. The laser reception component includes a light receiving component 12, an internal laser tube 13, a filter holder 14, an internal light knob regulating valve 15, a receiving mirror 16 and a filter 17. The light receiving component 12, the internal laser tube 13, the filter holder 14, the internal light knob regulating valve 15, the receiving mirror 16 and the filter 17 are installed on the optical bracket 5, the filter 17 is disposed inside the filter holder 14, and the receiving mirror 16 is disposed at a front side of the fixing position 52 of the optical bracket 5.

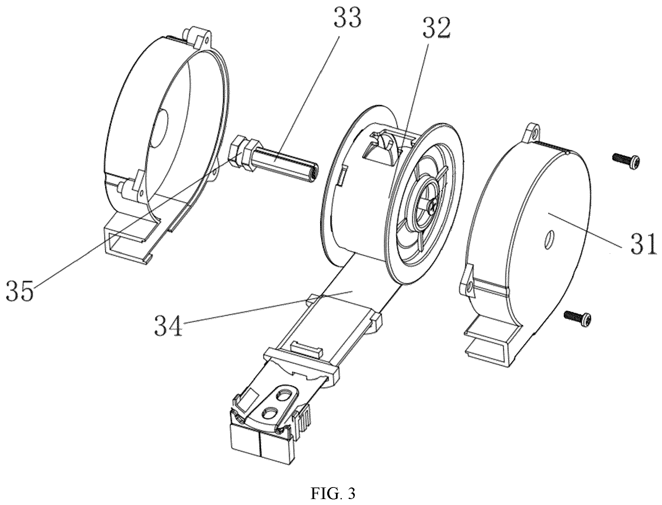

As shown in FIG. 3, the tape measure assembly 3 includes a tape measure shell 31, a tape core 32 is disposed in the tape measure shell 31, a tape measure pivot 33 is disposed in the tape core 32, and a tape 34 is wrapped around the tape measure pivot 33. The tape measure pivot 33 is fixed to the tape measure shell 31 through a pivot seat 35. In the embodiment, the tape measure assembly 3 is connected to the PCB 6 through the tape measure shell 31. To accommodate the circular tape measure shell 31, a rear end of the PCB 6 defines an arc-shaped notch 18. This design allows the tape measure shell 31 to be moved forward, reducing space waste and ensuring a more compact and streamlined structure.

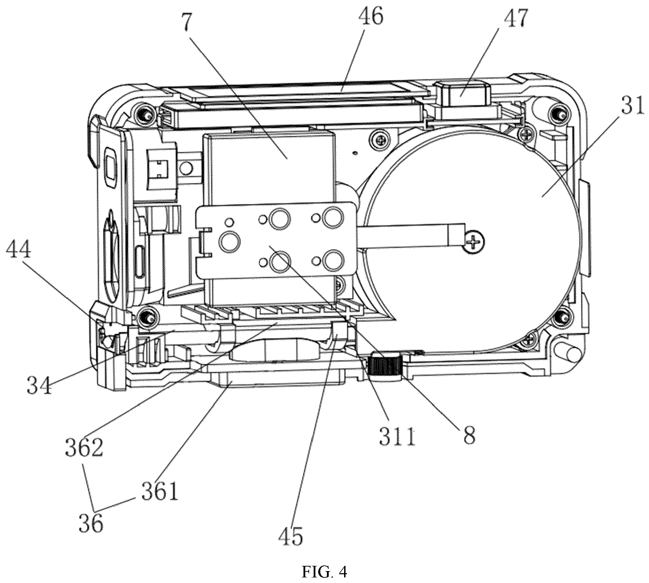

As shown in FIGS. 2 and 4, a lower part of the tape measure shell 31 defines a first tape outlet 311, and the shell 4 defines a second tape outlet 44 corresponding to the first tape outlet 311. A tape limit component 36 is disposed on a path from the first tape outlet 311 to the second tape outlet 44, and the tape limit component 36 is disposed at a lower side of the optical bracket 5. The tape limit component 36 disposed below the optical bracket 5 effectively utilizes a lower space of the optical bracket 5, which conveniently provides an installation position for the tape limit component 36.

In the embodiment, the tape limit component 36 includes a soft rubber button 361 and a top plate 362, an upper end of the soft rubber button 361 defines a curved surface matching a lower end of the tape 34, and the top plate 362 is fixed inside the shell 4 and located at the lower side of the optical bracket 5. The tape 34 passes between the soft rubber button 361 and the top plate 362. Compared to traditional tape measures, a limit part of the tape 34 is positioned at the front, and the corresponding top plate 362 is disposed above it, which makes the structure more robust and the locking effect of the limit better.

In the embodiment, in order to increase the intelligence level of the multifunctional laser ranging tape measure, identification codes 36 are uniformly disposed along an extension direction of the tape 34 on the tape 34, and an identification code sensor 45 capable of recognizing the identification code is disposed above the corresponding soft rubber button 361 inside the shell 4. The multifunctional laser ranging tape measure collects and analyzes data on the tape 34 through the identification code sensor 45, and can calculate and display a length of the tape 34 pulled out from the multifunctional laser ranging tape measure device.

In addition, the shell 4 is further provided with a display screen 46 and a measurement button 47 thereon, the display screen 46 is configured to display measurement data, and the measurement button 47 is configured to control the measurement process. The laser ranging assembly 1, the laser projecting assembly 2, the battery 7, the display screen 46, and the identification code sensor 45 are all electrically connected to the PCB 6.

Moreover, the PCB 6 is provided with a type-C charging port 61 thereon configured for charging the battery 7, and a side wall of the shell 4 correspondingly defines an opening 48 for the type-C charging port 61. Due to the diverse and complex applications of the multifunctional laser ranging tape measure, the type-C charging port is considered for portable design to ensure endurance in any scenario.

It should be understood that the above description of the specific embodiment of the invention is only for the purpose of illustrating the technical route and characteristics of the invention, and its purpose is to enable those skilled in the art to understand the content of the invention and implement it accordingly. However, the invention is not limited to the specific embodiment mentioned above. All changes or modifications made within the scope of the claims of the invention shall be covered by the protection scope of the invention.

## Claims

1. A multifunctional laser ranging tape measure, comprising:
a laser ranging assembly (1), a laser projecting assembly (2), a tape measure assembly (3), and a shell (4);
wherein the tape measure assembly (3) is disposed inside the shell (4), an optical bracket (5) is arranged along a radial direction of the tape measure assembly (3), the laser ranging assembly (1) and the laser projecting assembly (2) are fixed side by side on the optical bracket (5), the optical bracket (5) comprises a rear extension part (51), and a printed circuit board (PCB) (6) is fixed on the rear extension part (51).

2. The multifunctional laser ranging tape measure as claimed in claim 1, wherein a battery (7) and a button plate (8) are disposed inside the shell (4), and functional physical buttons (9) are disposed at positions corresponding to the button plate (8) on the shell (4).

3. The multifunctional laser ranging tape measure as claimed in claim 1, wherein the optical bracket (5) comprises a fixing position (52) of the laser ranging assembly (1) and a fixing position (53) of the laser projecting assembly (2); the laser ranging assembly (1) is fixed to the fixing position (52) of the laser ranging assembly (1) by threaded connection or snap ring fitting, and the laser projecting assembly (2) is fixed to the fixing position (53) of the laser projecting assembly (2) by a locking fastener (22).

4. The multifunctional laser ranging tape measure as claimed in claim 1, wherein the laser ranging assembly (1) comprises a laser emission tube (11) and a laser reception component, the shell (4) defines a light emission window (41) corresponding to the laser emission tube (11) and a light reception window (42) corresponding to the laser reception component; and
the laser projecting assembly (2) comprises a built-in light source, and the shell (4) defines a laser projecting window (43) corresponding to the light source.

5. The multifunctional laser ranging tape measure as claimed in claim 1, wherein the tape measure assembly (3) comprises a tape measure shell (31), a tape core (32) is disposed in the tape measure shell (31), a tape measure pivot (33) is disposed in the tape core (32), a tape (34) is wrapped around the tape measure pivot (33), and the tape measure pivot (33) is fixed to the tape measure shell (31) through a pivot seat (35); and
a lower part of the tape measure shell (31) defines a first tape outlet (311), the shell (4) defines a second tape outlet (44) corresponding to the first tape outlet (311); a tape limit component (36) is disposed on a path from the first tape outlet (311) to the second tape outlet (44), and the tape limit component (36) is disposed at a lower side of the optical bracket (5).

6. The multifunctional laser ranging tape measure as claimed in claim 5, wherein the tape limit component (36) comprises a soft rubber button (361) and a top plate (362), an upper end of the soft rubber button (361) is provided with a curved surface matching a lower end of the tape (34), and the top plate (362) is fixed inside the shell (4) and located at the lower side of the optical bracket (5); and the tape (34) passes between the soft rubber button (361) and the top plate (362).

7. The multifunctional laser ranging tape measure as claimed in claim 6, wherein identification codes (36) are uniformly disposed along an extension direction of the tape (34) on the tape (34), and an identification code sensor (45) capable of recognizing the identification codes (36) is disposed above the corresponding soft rubber button (361) inside the shell (4).

8. The multifunctional laser ranging tape measure as claimed in claim 7, wherein the shell (4) is further provided with a display screen (46) and a measurement button (47).

9. The multifunctional laser ranging tape measure as claimed in one of claims 7-8, wherein the laser ranging assembly (1), the laser projecting assembly (2), the battery (7), the display screen (46), and the identification code sensor (45) are all electrically connected to the PCB (6).

10. The multifunctional laser ranging tape measure as claimed in claim 1, wherein the PCB (6) is provided with a type-C charging port (61) configured for charging the battery (7), and a side wall of the shell (4) correspondingly defines an opening (48) for the type-C charging port (61).

11. The multifunctional laser ranging tape measure as claimed in claim 5, wherein the tape measure assembly (3) is connected to the PCB (6) through the tape measure shell (31).

12. The multifunctional laser ranging tape measure as claimed in claim 5, wherein a rear end of the PCB (6) defines an arc-shaped notch (18), and the arc-shaped notch (18) is configured to accommodate the circular tape measure shell (31).

13. The multifunctional laser ranging tape measure as claimed in claim 4, wherein the laser projecting assembly comprises a laser projecting component (21), and a built-in light source is disposed in the laser projecting component (21).

14. The multifunctional laser ranging tape measure as claimed in claim 4, wherein the laser reception component further comprises a light receiving component (12), an internal laser tube (13), a filter holder (14), an internal light knob regulating valve (15), a receiving mirror (16), and a filter (17).

15. The multifunctional laser ranging tape measure as claimed in claim 14, wherein the light receiving component (12), the internal laser tube (13), the filter holder (14), the internal light knob regulating valve (15), the receiving mirror (16) and the filter (17) are installed on the optical bracket (5), the filter (17) is disposed inside the filter holder (14), and the receiving mirror (16) is disposed at a front side of the fixing position (52) of the optical bracket (5).

## Patentansprüche

1. Mehrfunktionales Laser-Entfernungsmessband, umfassend:
eine Laser-Entfernungsmesseinheit (1), eine Laser-Projektionseinheit (2), eine Bandmaßeinheit (3) und ein Gehäuse (4);
wobei die Bandmaßeinheit (3) im Inneren des Gehäuses (4) angeordnet ist, ein optischer Halter (5) in radialer Richtung der Bandmaßeinheit (3) angeordnet ist, die Laser-Entfernungsmesseinheit (1) und die Laser-Projektionseinheit (2) nebeneinander an dem optischen Halter (5) befestigt sind, der optische Halter (5) einen hinteren Verlängerungsabschnitt (51) umfasst und eine Leiterplatte (PCB) (6) an dem hinteren Verlängerungsabschnitt (51) befestigt ist.

2. Mehrfunktionales Laser-Entfernungsmessband nach Anspruch 1, wobei im Inneren des Gehäuses (4) eine Batterie (7) und eine Tastenplatte (8) angeordnet sind und an dem Gehäuse (4) an den der Tastenplatte (8) entsprechenden Stellen funktionelle physische Tasten (9) vorgesehen sind.

3. Mehrfunktionales Laser-Entfernungsmessband nach Anspruch 1, wobei der optische Halter (5) eine Befestigungsposition (52) für die Laser-Entfernungsmesseinheit (1) und eine Befestigungsposition (53) für die Laser-Projektionseinheit (2) umfasst; die Laser-Entfernungsmesseinheit (1) an der Befestigungsposition (52) der Laser-Entfernungsmesseinheit (1) durch Schraubverbindung oder Sprengringbefestigung fixiert ist und die Laser-Projektionseinheit (2) an der Befestigungsposition (53) der Laser-Projektionseinheit (2) durch ein Verriegelungselement (22) fixiert ist.

4. Mehrfunktionales Laser-Entfernungsmessband nach Anspruch 1, wobei die Laser-Entfernungsmesseinheit (1) eine Laseremissionsröhre (11) und eine Laserempfangskomponente umfasst, wobei das Gehäuse (4) ein Lichtemissionsfenster (41) entsprechend der Laseremissionsröhre (11) und ein Lichtempfangsfenster (42) entsprechend der Laserempfangskomponente aufweist; und
die Laser-Projektionseinheit (2) eine eingebaute Lichtquelle umfasst und das Gehäuse (4) ein Laserprojektionsfenster (43) entsprechend der Lichtquelle aufweist.

5. Mehrfunktionales Laser-Entfernungsmessband nach Anspruch 1, wobei die Bandmaßeinheit (3) ein Bandmaßgehäuse (31) umfasst, in dem Bandmaßgehäuse (31) ein Bandkern (32) angeordnet ist, in dem Bandkern (32) eine Bandmaßachse (33) angeordnet ist, ein Band (34) um die Bandmaßachse (33) gewickelt ist und die Bandmaßachse (33) durch einen Achssitz (35) an dem Bandmaßgehäuse (31) befestigt ist; und
ein unterer Teil des Bandmaßgehäuses (31) einen ersten Bandauslass (311) definiert, das Gehäuse (4) einen zweiten Bandauslass (44) entsprechend dem ersten Bandauslass (311) definiert; wobei auf einem Weg vom ersten Bandauslass (311) zum zweiten Bandauslass (44) eine Bandbegrenzungskomponente (36) angeordnet ist und die Bandbegrenzungskomponente (36) an einer unteren Seite des optischen Halters (5) angeordnet ist.

6. Mehrfunktionales Laser-Entfernungsmessband nach Anspruch 5, wobei die Bandbegrenzungskomponente (36) einen Weichgummiknopf (361) und eine Abdeckplatte (362) umfasst, wobei ein oberes Ende des Weichgummiknopfs (361) mit einer gekrümmten Oberfläche versehen ist, die zu einem unteren Ende des Bandes (34) passt, und die Abdeckplatte (362) im Inneren des Gehäuses (4) fixiert und an der unteren Seite des optischen Halters (5) angeordnet ist; und das Band (34) zwischen dem Weichgummiknopf (361) und der Abdeckplatte (362) hindurchgeführt ist.

7. Mehrfunktionales Laser-Entfernungsmessband nach Anspruch 6, wobei entlang einer Erstreckungsrichtung des Bandes (34) auf dem Band (34) gleichmäßig Identifikationscodes (36) angeordnet sind und oberhalb des entsprechenden Weichgummiknopfs (361) im Inneren des Gehäuses (4) ein Identifikationscodesensor (45) angeordnet ist, der die Identifikationscodes (36) erkennen kann.

8. Mehrfunktionales Laser-Entfernungsmessband nach Anspruch 7, wobei das Gehäuse (4) ferner mit einem Display (46) und einer Messtaste (47) versehen ist.

9. Mehrfunktionales Laser-Entfernungsmessband nach einem der Ansprüche 7-8, wobei die Laser-Entfernungsmesseinheit (1), die Laser-Projektionseinheit (2), die Batterie (7), das Display (46) und der Identifikationscodesensor (45) alle elektrisch mit der PCB (6) verbunden sind.

10. Mehrfunktionales Laser-Entfernungsmessband nach Anspruch 1, wobei die PCB (6) mit einem Typ-C-Ladeanschluss (61) zum Laden der Batterie (7) versehen ist und eine Seitenwand des Gehäuses (4) entsprechend eine Öffnung (48) für den Typ-C-Ladeanschluss (61) definiert.

11. Mehrfunktionales Laser-Entfernungsmessband nach Anspruch 5, wobei die Bandmaßeinheit (3) über das Bandmaßgehäuse (31) mit der PCB (6) verbunden ist.

12. Mehrfunktionales Laser-Entfernungsmessband nach Anspruch 5, wobei ein hinteres Ende der PCB (6) eine bogenförmige Aussparung (18) definiert und die bogenförmige Aussparung (18) zur Aufnahme des kreisförmigen Bandmaßgehäuses (31) ausgebildet ist.

13. Mehrfunktionales Laser-Entfernungsmessband nach Anspruch 4, wobei die Laser-Projektionseinheit eine Laser-Projektionskomponente (21) umfasst und in der Laser-Projektionskomponente (21) eine eingebaute Lichtquelle angeordnet ist.

14. Mehrfunktionales Laser-Entfernungsmessband nach Anspruch 4, wobei die Laserempfangskomponente ferner eine Lichtempfangskomponente (12), eine interne Laseröhre (13), einen Filterhalter (14), ein internes Lichtregelventil (15), einen Empfangsspiegel (16) und einen Filter (17) umfasst.

15. Mehrfunktionales Laser-Entfernungsmessband nach Anspruch 14, wobei die Lichtempfangskomponente (12), die interne Laseröhre (13), der Filterhalter (14), das interne Lichtregelventil (15), der Empfangsspiegel (16) und der Filter (17) an dem optischen Halter (5) angebracht sind, der Filter (17) im Inneren des Filterhalters (14) angeordnet ist und der Empfangsspiegel (16) an einer Vorderseite der Befestigungsposition (52) des optischen Halters (5) angeordnet ist.

## Revendications

1. Un mètre ruban télémétrique laser multifonctionnel, comprenant:
un ensemble télémétrie laser (1), un ensemble projection laser (2), un ensemble mètre ruban (3) et un boîtier (4);
dans lequel l'ensemble mètre ruban (3) est disposé à l'intérieur du boîtier (4), un support optique (5) est agencé suivant une direction radiale de l'ensemble mètre ruban (3), l'ensemble télémétrie laser (1) et l'ensemble projection laser (2) sont fixés côte à côte sur le support optique (5), le support optique (5) comprend une partie d'extension arrière (51), et une carte de circuit imprimé (PCB) (6) est fixée sur la partie d'extension arrière (51).

2. Le mètre ruban télémétrique laser multifonctionnel selon la revendication 1, dans lequel une batterie (7) et une plaque de boutons (8) sont disposées à l'intérieur du boîtier (4), et des boutons physiques fonctionnels (9) sont disposés à des positions correspondant à la plaque de boutons (8) sur le boîtier (4).

3. Le mètre ruban télémétrique laser multifonctionnel selon la revendication 1, dans lequel le support optique (5) comprend une position de fixation (52) de l'ensemble télémétrie laser (1) et une position de fixation (53) de l'ensemble projection laser (2); l'ensemble télémétrie laser (1) est fixé à la position de fixation (52) de l'ensemble télémétrie laser (1) par liaison filetée ou par ajustement avec bague élastique, et l'ensemble projection laser (2) est fixé à la position de fixation (53) de l'ensemble projection laser (2) par un élément de verrouillage (22).

4. Le mètre ruban télémétrique laser multifonctionnel selon la revendication 1, dans lequel l'ensemble télémétrie laser (1) comprend un tube d'émission laser (11) et un composant de réception laser, le boîtier (4) définit une fenêtre d'émission lumineuse (41) correspondant au tube d'émission laser (11) et une fenêtre de réception lumineuse (42) correspondant au composant de réception laser; et
l'ensemble projection laser (2) comprend une source lumineuse intégrée, et le boîtier (4) définit une fenêtre de projection laser (43) correspondant à la source lumineuse.

5. Le mètre ruban télémétrique laser multifonctionnel selon la revendication 1, dans lequel l'ensemble mètre ruban (3) comprend un boîtier de mètre ruban (31), un noyau de ruban (32) est disposé dans le boîtier de mètre ruban (31), un pivot de mètre ruban (33) est disposé dans le noyau de ruban (32), un ruban (34) est enroulé autour du pivot de mètre ruban (33), et le pivot de mètre ruban (33) est fixé au boîtier de mètre ruban (31) par l'intermédiaire d'un support de pivot (35); et
une partie inférieure du boîtier de mètre ruban (31) définit une première sortie de ruban (311), le boîtier (4) définit une deuxième sortie de ruban (44) correspondant à la première sortie de ruban (311); un composant de limitation de ruban (36) est disposé sur un trajet allant de la première sortie de ruban (311) à la deuxième sortie de ruban (44), et le composant de limitation de ruban (36) est disposé sur un côté inférieur du support optique (5).

6. Le mètre ruban télémétrique laser multifonctionnel selon la revendication 5, dans lequel le composant de limitation de ruban (36) comprend un bouton en caoutchouc souple (361) et une plaque supérieure (362), une extrémité supérieure du bouton en caoutchouc souple (361) est pourvue d'une surface courbe adaptée à une extrémité inférieure du ruban (34), et la plaque supérieure (362) est fixée à l'intérieur du boîtier (4) et située sur le côté inférieur du support optique (5); et le ruban (34) passe entre le bouton en caoutchouc souple (361) et la plaque supérieure (362).

7. Le mètre ruban télémétrique laser multifonctionnel selon la revendication 6, dans lequel des codes d'identification (36) sont disposés de manière uniforme le long d'une direction d'extension du ruban (34) sur celui-ci, et un capteur de codes d'identification (45) apte à reconnaître les codes d'identification (36) est disposé au-dessus du bouton en caoutchouc souple (361) correspondant à l'intérieur du boîtier (4).

8. Le mètre ruban télémétrique laser multifonctionnel selon la revendication 7, dans lequel le boîtier (4) est en outre pourvu d'un écran d'affichage (46) et d'un bouton de mesure (47).

9. Le mètre ruban télémétrique laser multifonctionnel selon l'une des revendications 7 à 8, dans lequel l'ensemble télémétrie laser (1), l'ensemble projection laser (2), la batterie (7), l'écran d'affichage (46) et le capteur de codes d'identification (45) sont tous connectés électriquement à la PCB (6).

10. Le mètre ruban télémétrique laser multifonctionnel selon la revendication 1, dans lequel la PCB (6) est pourvue d'un port de charge de type-C (61) configuré pour charger la batterie (7), et une paroi latérale du boîtier (4) définit en correspondance une ouverture (48) pour le port de charge de type-C (61).

11. Le mètre ruban télémétrique laser multifonctionnel selon la revendication 5, dans lequel l'ensemble mètre ruban (3) est connecté à la PCB (6) par l'intermédiaire du boîtier de mètre ruban (31).

12. Le mètre ruban télémétrique laser multifonctionnel selon la revendication 5, dans lequel une extrémité arrière de la PCB (6) définit une encoche arquée (18), et l'encoche arquée (18) est configurée pour recevoir le boîtier de mètre ruban circulaire (31).

13. Le mètre ruban télémétrique laser multifonctionnel selon la revendication 4, dans lequel l'ensemble projection laser comprend un composant de projection laser (21), et une source lumineuse intégrée est disposée dans le composant de projection laser (21).

14. Le mètre ruban télémétrique laser multifonctionnel selon la revendication 4, dans lequel le composant de réception laser comprend en outre un composant de réception lumineuse (12), un tube laser interne (13), un support de filtre (14), une valve de régulation de lumière interne (15), un miroir de réception (16) et un filtre (17).

15. Le mètre ruban télémétrique laser multifonctionnel selon la revendication 14, dans lequel le composant de réception lumineuse (12), le tube laser interne (13), le support de filtre (14), la valve de régulation de lumière interne (15), le miroir de réception (16) et le filtre (17) sont installés sur le support optique (5), le filtre (17) est disposé à l'intérieur du support de filtre (14), et le miroir de réception (16) est disposé sur un côté avant de la position de fixation (52) du support optique (5).
